(19)

Europäisches Patentamt
European Patent Office
Office européen des brevets

(11) EP 2 381 393 A1

(12) EUROPEAN PATENT APPLICATION

(43) Date of publication:
26.10.2011 Bulletin 2011/43

(51) Int Cl.:
*G06N 7/02* (2006.01)

(21) Application number: 10305410.2

(22) Date of filing: 20.04.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(71) Applicant: Alcatel Lucent
75008 Paris (FR)

(72) Inventors:
• Razavi, Rouzbeh
  15 Dublin (IE)

• Claussen, Holger
  Straffan, Co. Kildare (IE)
• Ho, Lester
  Swinden
  Wiltshire SN5 5GD (GB)

(74) Representative: Brose, Gerhard et al
Alcatel-Lucent Deutschland AG
Intellectual Property & Corporate Standards
Lorenzstrasse 10
70435 Stuttgart (DE)

(54) **A method of reinforcement learning, corresponding computer program product, and data storage device therefor**

(57) The invention concerns a method of reinforcement learning, the method comprising the steps of perceiving (101) a current state from a fuzzy set of states of an environment; based on the current state and a policy, choosing (102) an action from a fuzzy set of actions, wherein the policy associates each state from the fuzzy set of states with an action from the fuzzy set of actions and, for each state from the fuzzy set of states, is based on a probability distribution on the fuzzy set of actions; receiving (103) from the environment a new state and a reward; and, based on the reward, optimizing (104) the policy. The invention further concerns a computer program product and a device therefor.

100

Fig. 1

EP 2 381 393 A1

## Description

### Field of the Invention

The invention relates to a method of reinforcement learning comprising the steps of perceiving a current state from a set of states of an environment; based on the current state and a policy, choosing an action from a set of actions, wherein the policy associates each state from the set of states with an action from the set of actions; receiving from the environment a new state and a reward; and, based on the reward, optimizing the policy. The invention further relates to a computer program product comprising computer-executable instructions for performing said method when the program is run on a computer, and to a device programmed or configured to perform said method.

### Background

Inspired by related psychological theory, in computer science, reinforcement learning is a sub-area of machine learning concerned with how an agent ought to take actions in an environment so as to maximize some notion of long-term reward. In other words, reinforcement learning algorithms attempt to find a policy that maps states of the world to the applicable actions.

In this context, the environment is typically formulated by means of a finite-state Markov decision process (MDP), that is, a mathematical framework for modeling decision-making in situations where outcomes are partly random and partly under the control of a decision maker. State transition probabilities and reward probabilities in the MDP are typically stochastic but stationary over the course of the problem.

Reinforcement learning differs from so-called supervised learning in that correct input/output pairs are never presented, nor sub-optimal actions explicitly corrected. Further, there is a focus on on-line performance, which involves finding a balance between exploration of uncharted territory and exploitation of current knowledge. Sebastian B. Thrun describes a variety of suitable strategies in "Efficient Exploration in Reinforcement Learning", Technical report CMU-CS-92-102, School of Computer Science, Carnegie-Mellon University, Pittsburgh, Pennsylvania. A major downside of these conventional techniques is their inapplicability to reinforcement learning systems whose states and actions are members of fuzzy sets, hereinafter called fuzzy reinforcement learning systems. In set theory, by fuzzy set, as introduced by Lotfi A. Zadeh in "Fuzzy Sets", Information and Control, Volume 8, 1965, pages 338 to 353, is meant a set whose elements have degrees of membership. Fuzzy set theory permits the gradual assessment of the membership of states and actions in their respective sets; this is described with the aid of a membership function valued in the real unit interval [0, 1].

### Summary

It is an objective of the invention to present an improved exploration strategy that is suitable for use in a fuzzy reinforcement learning system. It is a further objective to present a related technique that can be employed in dynamic time-varying or noisy learning environments. In this context, by noisy is meant an environment that is subject to random fluctuation or unexplained variation.

This objective is achieved by a method of reinforcement learning comprising the steps of perceiving a current state from a fuzzy set of states of an environment; based on the current state and a policy, choosing an action from a fuzzy set of actions, wherein the policy associates each state from the fuzzy set of states with an action from the fuzzy set of actions and, for each state from the fuzzy set of states, is based on a probability distribution on the fuzzy set of actions; receiving from the environment a new state and a reward; and, based on the reward, optimizing the policy. The object further is achieved by a computer program product comprising computer-executable instructions for performing said method when the program is run on a computer, or by a device programmed or configured to perform said method.

A main idea of the invention is to maintain, for each state contained in a fuzzy set of states, a probability distribution on the fuzzy set of actions. The policy employed is based, inter alia, on this probability distribution.

In particular, the use of fuzzy sets to represent the possible states and actions of the reinforcement learning model allows for the employment of a policy based on fuzzy logic. In artificial intelligence (AI), by fuzzy logic is meant a form of multi-valued logic derived from fuzzy set theory to deal with reasoning that is approximate rather than precise. Specifically, according to the principles of fuzzy logic, the degree of truth of a statement can range between 0 and 1 and is not constrained to the two truth values of classic propositional logic.

As a further benefit, the proposed approach allows for the application of reinforcement learning to a wide range of domains in which information is incomplete or imprecise. One such domain is the operation of dynamic service environments, such as is called for in the provisioning of wireless networks.

Further developments of the invention can be gathered from the dependent claims and the following description.

In the following the invention will be explained further making reference to the attached drawing.

To implement reinforcement learning according to an embodiment of the invention, a current state from a fuzzy set of states of an environment is perceived. Based on this current state and a policy, an action is chosen from a fuzzy set of actions, the policy associating each state with an action. Herein, for each state from the fuzzy set of states, the policy is based on a probability distribution on the fuzzy set of actions. In response to the select action, a new state and a reward are received from the environment. Finally, based on the reward, the policy is optimized.

## Brief Description of the Figures

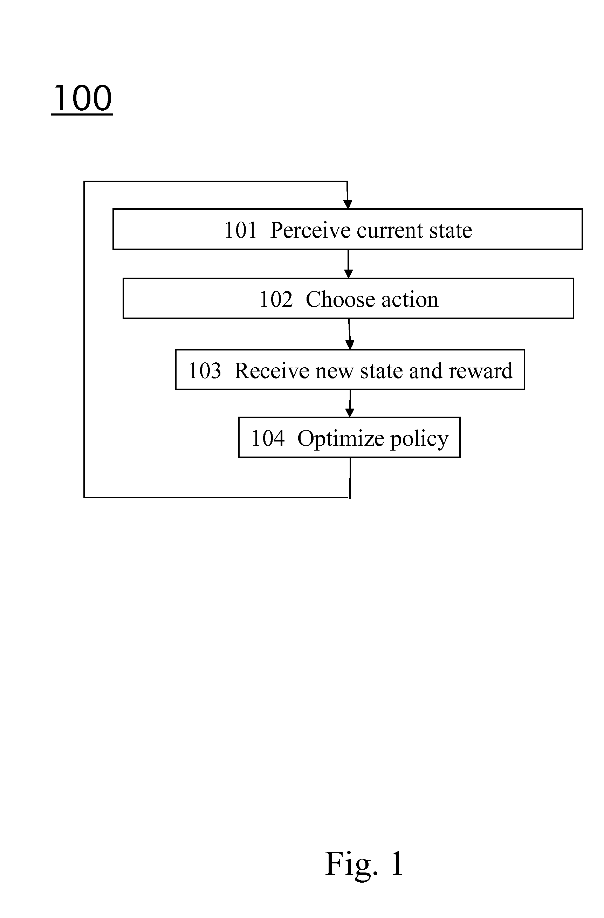

Fig. 1 shows a flowchart depicting a method according to an embodiment of the invention.

## Description of the Embodiments

In the following, a method according to the invention is elucidated by way of example, referencing Fig. 1.
The flowchart 100 of Fig. 1 comprises a first processing step 101, a second processing step 102, a third processing step 103, and a fourth processing step 104, each represented by a rectangle. A flow of control passing through the processing steps 101 to 104 and leading back from the fourth processing step 104 to the first processing step 101 is represented by a set of arrows. An arrow starting at a first symbol and ending at a second symbol indicates that control passes from the first symbol to the second symbol.
In the embodiment at hand, the method is applied by an agent implemented as a computer program.
In the first processing step 101, the agent perceives a current state from a set of states of an environment. This set of states takes the form of a fuzzy set. To reflect multiple input parameters, each state is defined as a tuple of input variables, the set of states thus being the Cartesian product of the universes of discourse of all these variables. To further allow for the use of "crisp" - as opposed to fuzzy - input values, the perception of the current states requires the agent to fuzzify the input variables obtained from the environment by mapping them to membership functions.
In the second processing step 102, the agent chooses an action from a set of actions, the choice being based on the current state received in the first processing step 101 and a policy. This policy associates each state from the set of states with an action from the set of actions. Like the set of states, the set of actions takes the form of a fuzzy set. Accordingly, the policy is based on a fuzzy rule, that is, a conditional statement in the form "IF x is A THEN y is B", wherein x and y are linguistic variables and A and B are linguistic values determined by fuzzy sets on their respective universe of discourse. In fuzzy logic, the if-part "x is A" of the rule is called the antecedent or premise, while the then-part "y is B" of the rule is called the consequent or conclusion. Therefore, each possible state is defined by a unique antecedent of the fuzzy rule underlying the policy. Based on such policy, the agent employs rule-based inference to select the applicable action, that is, it applies the rule to the fuzzified input variables in order to draw a conclusion as to the appropriate response.
In the embodiment at hand, the policy associates each action a from the set of actions A available to each state s from the set of states $S$ with a ranking $R(s, a)$. Based on this ranking, the agent calculates a probability distribution $P_{Action}$ on $A$. To trade off efficiently between exploration and exploitation - a trade-off which characterizes many real-world active learning tasks -, the probability distribution assigned to each applicable action a in state s is defined as

$$P_{action}(a,s) = \frac{F(R(s,a))G(N(s,a))(1 - Greedy(s,a))}{\sum_{a'} F(R(s,a'))G(N(s,a'))(1 - Greedy(s,a'))} \quad .$$

Here, $F$ is a function that determines the likelihood of an action $a$ to be selected for exploration in state $s$ in association with its ranking. The impact of sub-optimal explorations can be discounted by selecting higher-ranking more frequently. This is especially important when the learning agent has tried all solutions sufficiently often. Therefore, ideally, $F$ should be a strictly ascending function. In its simplest form, $F(x) = x$.
Furthermore, $G$ is a function that reflects the effective number of previous trials of action a in state $s$, $N(s, a)$. The selection of $G$ would require more consideration. In each given state, if there are actions that have not been tried or have been tried only seldom, it might be advantageous to assign a higher probability to such actions. However, this tendency should be reduced as an action is tried and tried again. In those situations where most actions have been attempted sufficiently often, it is considered preferable to reemphasize the suitability of individual actions by considering their associated ranking when nominating an action for exploration. This can be achieved by selecting G as a descending and convex function. For example,

$$G(x) = \frac{1}{(1 + \log_n x)} \quad n > 1 \quad \text{or} \quad G(x) = \frac{1}{(1 + \sqrt[n]{x})} \quad n > 1$$

Throughout the above formulae, *Greedy(s,a)* is a binary parameter indicating if action a is the most promising alternative, hereinafter called greedy action, in state *s*:

$$Greedy(s,a) = \begin{cases} 1 & if\ a_{Greedy}(s) = a \\ 0 & Otherwise \end{cases}$$

The reason to include *Greedy(s,a)* is to eliminate any chance of the greedy action to be chosen during exploration. Additionally, there is an optional extension to the algorithm making it more suitable for dynamic time-varying environments. In such situations, it might be useful to examine and track how recently a particular action has been tried rather than merely record the number of applications of that action.

Once $P_{action}$ is calculated for all actions in each activated state, each state nominates an action for the exploration. The nominated action is selected in respect to the associated $P_{action}$, that is, the higher $P_{action}$, the higher the probability for a particular action to be nominated. This can be realized simply through generation of random numbers. After all activated states have nominated their actions for exploration, the agent moves to a second phase where it needs to decide which state, if any, to explore. At the end of that second phase, a proposal identifying the state-action pair to be explored as input to a third phase, in the course of which the proposal is ultimately accepted or rejected.

In the second phase, not only the states' strength, but also the strength of the actions nominated for exploration can additionally be calculated. While the exploring state strength ($Ss_{exp}$) is computed conventionally by normalizing the firing strength of each state (i.e. $\forall s \in S\ Ss_{exp}(s) = Ss(s)$), the exploring action strength is computed by considering the strength of the nominated action for exploration in each state together with the actions defined by the greedy algorithm for all other activated states. In fact, since only exploration is only allowed for one state at a time, if the action nominated by a particular state is explored, all other states would exploit the current policy by selecting their respective greedy actions. Therefore, in the second phase, each state s would be associated with two non-identical actions: the nominated action for exploration $a_{exp,s}$ and the greedy *action $a_{gr,s}$*. The exploring action strength of each state would then be defined as

$$As_{exp}(a_{exp,s}) = \frac{f_s + \sum_{s'} f_{s'}.Greedy(s',a)}{\sum_{s'} f_{s'}} \ .$$

In contrast to definition of the conventional action strength *As*, the exploring action strength $As_{exp}$ is defined with regard to each state. In fact, the exploring action strength of each state represents the overall strength of the action nominated by that state if exploration is to be performed. Therefore, to calculate this parameter, the sum of the strength of the nominating state and the strengths of all other states with identical greedy actions is to be considered. Recall that if a given state is being explored, avoiding multiple simultaneous explorations requires the greedy action selection mechanism to be used by all other activated states.

This is an important measure, since exploring an action with a higher strength is more effective than when the action strength is low and the impact of exploration can not be interpreted properly. Now when deciding to explore, the algorithm can select a state in that both the state strength itself and the overall strength of the nominated action to be explored are high. Notice that it is possible to have an action nominated by a state where the state strength itself is low but the overall strength of its nominated action is high, especially in the case when many other states nominate the very same action.

Since the learning goal is to derive suitable action-state pairs, both state and action strength parameters are to be considered simultaneously. Another useful measure is the effective number of previous explorations in each state. This can be simply calculated as the sum of the number of explorations for all actions in that state:

$$Ns(s,a) = \sum_a N(s,a)$$

Therefore, the overall probability of selecting state $s$ for exploration can be formulated as

$$P_{State}(s) = \frac{F'\big(Ss(s), As_{\exp}(a_{\exp,s})\big)G'(N_s)}{\sum_{s'} F'\big(Ss(s'), As_{\exp}(a_{\exp,s'})\big)G'(N_{s'})},$$

where $P_{state}$ represents the probability that state $s$ is selected for exploration if any exploration is desired at all. $F'$ and $G'$ are two arbitrary functions where the former serves to determine the contribution of the state and action strengths and the latter concerns the number of previous explorations. $F'$ should be an ascending function with regard to both input parameters (state and action strength) and zero crossing regarding the first input, that is, $F'(0, x) = 0$, where $x$ can take arbitrary values:

$$F'\big(Ss(s), As_{\exp}(a_{\exp,s})\big) = Ss(s) \cdot As_{\exp}(a_{\exp,s})$$

$G'$ is very similar to the function $G$ employed in the first phase. After computing $P_{state}$ for all activated states, the algorithm randomly chooses one of the states where the probability of selection of each state is defined by its associated $P_{state}$. The resulting proposal defining the state and the action to be explored is used in the third stage where the algorithm decides whether or accepts this exploration or continue to exploit. This invention recommends a slightly modified ε-greedy algorithm to be used to balance between the exploration and exploitation. Therefore a modified ε-greedy where the value of ε is adapted according to the number of past explorations for the intended exploring state-action pair. In fact, it is desired to start with a high exploration rate and to reduce this value as learning progresses. A simple way to adapt such strategy would be to specify the upper and lower bounds of the exploration rate and to vary the value of ε according to the number of previous explorations for each action state pair. As an example, given the selected state for exploration to be s and the action to explore is $a$, ε can be calculated as

$$\varepsilon(s,a) = \varepsilon_{low} + \frac{\varepsilon_{high} - \varepsilon_{low}}{\big(1 + N(a,s)\big)}.$$

In fact, ε$(s,a)$ represents the probability by which the exploration for action a in state $s$ is decided. Accordingly, the agent generates a series of uniformly distributed random numbers and compares the resulting values to ε$(s,a)$.

When exploiting, the agent selects the highest ranking action for the given state, that is, the greedy action:

$$\textit{If exploiting}: \ a_{Greedy}(s) = a \leftrightarrow \underset{a'}{Max}\big(R(s,a')\big) = R(s,a)$$

In the third processing step 103, in response to the action chosen in the second processing step 102, the agent receives from the environment a new state. The agent further receives a reward. In reinforcement learning, by reward is meant a real number, maximization of which is considered to be the agent's long-term goal.

Finally, in the fourth processing step 104, the agent, based on the reward received in the third processing step 103, optimizes the policy. Accordingly, the agent updates the ranking associated with each action. To reflect the different influence of each fuzzy rule on the overall reward, the agent takes into account the firing strength calculated in the second processing step 102 when adapting the ranking. The normalized firing strength, hereinafter called the state strength, is derived as

$$\forall s \in S \qquad Ss(s) \equiv \frac{f_s}{\sum_{s'} f_{s'}},$$

$f_s$ representing the firing strength of the state $s$.

Additionally, one can define a similar measure for the action space to determine the contribution of individual taken actions on the final collective action after the defuzzification stage. Generally speaking, since defuzzification is not a linear procedure, it is not an easy task to isolate and evaluate the impact of individual contributing actions on the overall collective result. However, the degree of truth of the state associated to each action can be considered as a fairly relevant measure. Additionally, it is quite possible that many states recommend identical actions. For example considering a fuzzy system with a number of simultaneously activated states, if all states recommend a very same action, regardless of the degree of truth of each state, the final collective output can be said to be fully in line with the individual actions. In practice, it is very common for at least a plurality of activated states to select the same action. Especially when the number of inputs to the fuzzy system is not excessive, the states are relatively similar, implying a high probability of identical actions to be resulting. The involvement of each individual action in deciding the final collective output is proportional to the sum of the firing strengths of all states nominating that particular action. Therefore, the action strength can be defined as

$$\forall a \in A \qquad As(a) \equiv \frac{\sum_{s} f_s . Selected(s,a)}{\sum_{s'} f_{s'}},$$

where *Selected(s,a)* is a binary parameter indicating whether or not action $a$ is the selected action in state $s$:

$$Selected(s,a) = \begin{cases} 1 & \textit{if a is selected for state s} \\ 0 & \textit{Otherwise} \end{cases}$$

In case all states advise completely different actions, thus no two states suggesting the same action, the action strength parameter for all nominated actions is considered equal to the corresponding state strengths of their nominating states. In general,

$$\forall s \in S \quad \forall a \in A \quad A_{selected,s} = a \implies As(a) \geq Ss(s).$$

Note that when proposing the reinforcement distribution algorithm and the subsequent rank updating procedure, we first consider myopic systems where only immediate rewards are concerned ($\gamma$=0). This is to facilitate the understanding of the proposed algorithms while the generalized algorithms are presented subsequently afterwards. In such a system, one simple way to update the ranking of the selected actions of the fired rules would be simply to use weighted averaging:

$$R(s,a) \leftarrow \frac{Sum(s,a).R(s,a) + w(s,a).F(r(s,a))}{Sum(s,a) + w(s,a)} \ ,$$

where $w(s,a)$ refers to the updating weight associated to the action $a$ in state $s$ and $Sum(s,a)$ represents the subtotal weight corresponding to action a in state $s$. After updating the rule's ranking, $Sum(s,a)$ would be updated as follows:

$$Sum(s,a) \leftarrow Sum(s,a) + w(s,a).$$

Moreover, $r(s,a)$ is the immediate observed reinforcement after taking action a in state s and $F$ is an arbitrary function that maps the reinforcements signal into to the actions' ranking space. This function could serve for various purposes such as to limit the range of the action's rankings or to establish a nonlinear mapping between the observed reinforcements and their impact on the associated actions' ranking. In its simplest form

$$F(r(s,a)) = r(s,a).$$

The averaging weights are defined as a fuzzy conjunction of the state strength and action strength, that is,

$$\forall s \in S, \forall a \in A \quad w(s,a) = \big(Ss(s) \wedge As(a)\big) \wedge Selected(s,a),$$

where A represents the conjunction operator. The rule of the selected parameter is to limit the update procedure only to the selected actions in fired states.

To reflect dynamic changes in the environment and provide for continuous adaptation of the model, the agent, having optimized the policy, returns to the first processing step 101 and reiterates until a predetermined stop condition is met.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawing merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method of reinforcement learning comprising the steps of
   perceiving (101) a current state from a fuzzy set of states of an environment,
   based on the current state and a policy, choosing (102) an action from a fuzzy set of actions, wherein the policy associates each state from the fuzzy set of states with an action from the fuzzy set of actions and, for each state from the fuzzy set of states, is based on a probability distribution on the fuzzy set of actions,
   in response to the action, receiving (103) from the environment a new state from the fuzzy set of states and a reward, and,
   based on the reward, optimizing (104) the policy.

2. A method according to claim 1, **characterized in that** the policy, for each state from the fuzzy set of states, associates each action from the fuzzy set of actions with a ranking and the step of choosing (102) the action is based on the ranking.

3. A method according to claim 2, **characterized in that**, for each state from the fuzzy set of states, the probability distribution assigns the maximum probability to the action associated with the highest ranking.

4. A method according to claim 3, **characterized in that**, for each state from the fuzzy set of states, the probability distribution assigns to each action a probability according to its associated ranking.

5. A method according to any of the preceding claims, **characterized in that** the action is chosen (102) stochastically according to the probability distribution.

6. A method according to any of the preceding claims, **characterized in that** at least one of the steps of perceiving (101) the current state, choosing (102) the action, receiving (103) the new state, and optimizing (104) the policy is iterated and the method comprises the further step of
   maintaining a statistic on previous iterations.

7. A method according to claim 6, **characterized in that** the policy is further based on an exploration rate, and the method comprises the further step of,
   in each iteration, reducing the exploration rate.

8. A method according to , **characterized in that** the method comprises the step of
   perceiving (101) a plurality of current states from the fuzzy set of states of the environment,
   wherein the step of choosing (102) the action is performed for each current state and, for all but one current state, the action with the highest ranking is chosen (102).

9. A computer program product comprising computer-executable instructions for performing a method when the program is run on a computer, the method comprising the steps of
   perceiving (101) a current state from a fuzzy set of states of an environment,
   based on the current state and a policy, choosing (102) an action from a fuzzy set of actions, wherein the policy associates each state from the fuzzy set of states with an action from the fuzzy set of actions and, for each state from the fuzzy set of states, is based on a probability distribution on the fuzzy set of actions,
   in response to the action, receiving (103) from the environment a new state from the fuzzy set of states and a reward, and,
   based on the reward, optimizing (104) the policy.

10. A device programmed or configured to perform a method comprising the steps of
    perceiving (101) a current state from a fuzzy set of states of an environment,
    based on the current state and a policy, choosing (102) an action from a fuzzy set of actions, wherein the policy associates each state from the fuzzy set of states with an action from the fuzzy set of actions and, for each state from the fuzzy set of states, is based on a probability distribution on the fuzzy set of actions,
    in response to the action, receiving (103) from the environment a new state from the fuzzy set of states and a reward, and,
    based on the reward, optimizing (104) the policy.

<u>100</u>

```
┌──────────────────────────────────────────┐
│      ┌──────────────────────────────────┐ │
│      │  101  Perceive current state     │ │
│      └──────────────────────────────────┘ │
│                      │                     │
│      ┌──────────────────────────────────┐ │
│      │  102  Choose action              │ │
│      └──────────────────────────────────┘ │
│                      │                     │
│        ┌────────────────────────────────┐ │
│        │ 103  Receive new state and reward│
│        └────────────────────────────────┘ │
│                      │                     │
│          ┌──────────────────────────┐     │
│          │ 104  Optimize policy      │     │
│          └──────────────────────────┘     │
│                      │                     │
└──────────────────────┘
```

Fig. 1

Europäisches
Patentamt

European
Patent Office

Office européen
des brevets

# EUROPEAN SEARCH REPORT

**Application Number**

EP 10 30 5410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUIS PEÑA, ANTONIO LATORRE, JOSÉ-MARÍA PEÑA AND SASCHA OSSOWSKI: "Tentative Exploration on Reinforcement Learning Algorithms for Stochastic Rewards" LECTURE NOTES IN COMPUTER SCIENCE, vol. 5572/2009, 2009, pages 336-343, XP002601114 Springer-Verlag Berlin Heidelberg DOI: 10.1007/978-3-642-02319-4_40 * page 336 - page 342 * | 1-10 | INV. G06N7/02 |
| X | US 2002/198854 A1 (BERENJI HAMID R [US] ET AL) 26 December 2002 (2002-12-26) * abstract; claims 1-12; figures 1-4 * * paragraph [0003] - paragraph [0158] * | 1-10 | |
| X | BERENJI H R ET AL: "A convergent actor-critic-based frl algorithm with application to power management of wireless transmitters" IEEE TRANSACTIONS ON FUZZY SYSTEMS, IEEE SERVICE CENTER, PISCATAWAY, NJ, US LNKD-DOI:10.1109/TFUZZ.2003.814834, vol. 11, no. 4, 1 August 2003 (2003-08-01) , pages 478-485, XP011099702 ISSN: 1063-6706 * the whole document * | 1-10 | **TECHNICAL FIELDS SEARCHED (IPC)** G06N H04W |
| A | US 2010/094786 A1 (GUPTA RAKESH [US] ET AL) 15 April 2010 (2010-04-15) * abstract; claims 1-38; figures 1,3 * * paragraph [0008] - paragraph [0072] * | 1-10 | |
| A | US 2010/070439 A1 (TAKEUCHI JOHANE [JP] ET AL) 18 March 2010 (2010-03-18) * abstract; claims 1-6; figures 1-8 * * paragraph [0023] - paragraph [0077] * | 1-10 | |

-/--

The present search report has been drawn up for all claims

| Place of search | Date of completion of the search | Examiner |
|---|---|---|
| The Hague | 17 September 2010 | Volkmer, Markus |

EPO FORM 1503 03.82 (P04C01)

Europäisches Patentamt
European Patent Office
Office européen des brevets

# EUROPEAN SEARCH REPORT

Application Number

EP 10 30 5410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VALI DERHAMI, VAHID JOHARI MAJD, AND MAJID NILI AHMADABADI: "Exploration and exploitation balance management in fuzzy reinforcement learning" FUZZY SETS AND SYSTEMS, vol. 161, no. 4, 16 February 2010 (2010-02-16), pages 578-595, XP002601115 DOI: 10.1016/j.fss.2009.05.003 * page 578 - page 594 * | 1-10 | |
| A | ATLASIS<1> A F ET AL: "The use of learning algorithms in ATM networks call admission control problem: a methodology" COMPUTER NETWORKS, ELSEVIER SCIENCE PUBLISHERS B.V., AMSTERDAM, NL LNKD-DOI:10.1016/S1389-1286(00)00090-6, vol. 34, no. 3, 1 September 2000 (2000-09-01), pages 341-353, XP004304725 ISSN: 1389-1286 * page 343 - page 351 * | 1-10 | |
| A | ALY I EL-OSERY: "Probability versus possibility and their application to actuator sensor networks" SOFT COMPUTING ; A FUSION OF FOUNDATIONS, METHODOLOGIES AND APPLICATIONS, SPRINGER, BERLIN, DE, vol. 12, no. 5, 15 May 2007 (2007-05-15), pages 425-434, XP019564562 ISSN: 1433-7479 * page 429 - page 433 * | 1-10 | TECHNICAL FIELDS SEARCHED (IPC) |

The present search report has been drawn up for all claims

| Place of search | Date of completion of the search | Examiner |
|---|---|---|
| The Hague | 17 September 2010 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 30 5410

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2010

| Patent document cited in search report | Publication date | Patent family member(s) | Publication date |
|---|---|---|---|
| US 2002198854 A1 | 26-12-2002 | NONE | |
| US 2010094786 A1 | 15-04-2010 | WO 2010045272 A1 | 22-04-2010 |
| US 2010070439 A1 | 18-03-2010 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LOTFI A. ZADEH.** Fuzzy Sets. *Information and Control,* 1965, vol. 8, 338-353